# EUROPÄISCHE PATENTSCHRIFT

(11) **EP 3 805 578 B1**
(45) Veröffentlichungstag und Bekanntmachung des Hinweises auf die Patenterteilung: **29.12.2021**
(21) Anmeldenummer: 19202774.6
(22) Anmeldetag: 11.10.2019
(51) Int. Cl.: F16B 33/00, F16B 35/00, F16B 43/00

(54) **DICHTUNGSMANSCHETTE**
SEALING SLEEVE
MANCHETTE D'ÉTANCHÉITÉ

(43) Veröffentlichungstag der Anmeldung: 14.04.2021
(73) Patentinhaber: EDM-System GmbH, 57399 Kirchhundem (DE)
(72) Erfinder: Hille, Markus, 57399 Kirchhundem (DE); Malzkorn, Ralf, 34596 Bad Zwesten (DE)
(74) Vertreter: Patentanwälte Dörner & Kötter PartG mbB

(56) Entgegenhaltungen:
- EP-A1- 2 930 379
- WO-A1-2005/019661
- WO-A1-2017/039779
- DE-U1-202012 104 317
- DE-U1-202018 003 632
- US-A- 3 202 033
- US-A- 3 482 864

## Beschreibung

Die Erfindung betrifft einen Schraubdübel nach dem Patentanspruch 1.

Insbesondere im Bereich sanitärer Nasszellen es ist erforderlich, Befestigungslöcher, beispielsweise zur Befestigung von Duschwänden, Brausehaltern oder auch von Sanitärbecken gegen Eindringen von Wasser abzudichten, um das Mauerwerk zu schützen. Bei unzureichender Abdichtung besteht die Gefahr, dass sowohl die Befestigungsmittel selbst, als auch die mit der Bohrung in Kontakt stehenden Materialien der Feuchtigkeit ausgesetzt werden, woraus sich die Gefahr eines vorzeitigen Lösens bzw. Versagens der Befestigungsmittel ergibt. Darüber hinaus kann in das Mauerwerk eindringende Feuchtigkeit erhebliche Wandschäden verursachen.

Aus der DE 198 45 696 A1 ist ein Dübel zur Aufnahme eines Befestigungsmittels, beispielsweise einer Schraube oder dergleichen, mit einem Dübelkopf und einem sich an den Dübelkopf anschließenden Dübelschaft bekannt, an dem ein Abdichtmittel in Form eines Silikonkissens angeordnet ist, dass einstückig mit dem Dübel verbunden ist. Nachteilig an diesem Dübel ist, dass dieser in seiner Fertigung aufwändig und teuer ist.

In der DE 10 2013 104 506 A1 wird daher vorgeschlagen, den Dübel mit einem luftdichten Dübelkörper zu versehen, der vollständig mit einem Dichtstoff gefüllt und dessen Öffnung für ein einzusetzendes Befestigungsmittel mit einer Folie abgedichtet verschlossen ist. Der luftdichte Dübelkörper kann dabei durch ein separat herstellbares Folienkissen gebildet sein, dass in den Dübel eingebracht wird. Auch dieser Dübel gestaltet sich in seiner Fertigung aufwändig. Zudem ergibt sich hier die Problematik, dass das Dichtmittel beim Einschrauben einer Schraube teilweise komprimiert wird, wodurch der Einschraubvorgang beeinträchtigt ist. Darüber hinaus kann durch austretende Dichtmasse die Wandanlagefläche beeinträchtigt sein, wodurch eine glatte Anlage eines zu befestigenden Objekts verhindert ist.

WO 2005/019661 A1 beschreibt ein Verankerungselement nach dem Stand der Technik.

Hier will die Erfindung Abhilfe schaffen. Der Erfindung liegt die Aufgabe zugrunde, eine Manschette zur Abdichtung von Schraubdübeln gegenüber einer Wand bereitzustellen, die aufwandminimiert herstellbar und einfach anwendbar ist und dabei eine gute Abdichtung ohne Behinderung eines Einschraubvorgangs ermöglicht. Gemäß der Erfindung wird diese Aufgabe durch einen Schraubdübel mit den Merkmalen des Patentanspruchs 1 gelöst.

Mit der Erfindung ist eine Manschette zur Abdichtung von Schraubdübeln gegenüber einer Wand bereitgestellt, die aufwandminimiert herstellbar und einfach anzuwenden ist und die darüber hinaus eine gute Abdichtung ohne Behinderung des Einschraubvorgangs ermöglicht. Dadurch, dass die Manschette einen flächigen Wandanlageabschnitt aufweist, in den eine im wesentlichen kreisrunde Öffnung eingebracht ist, wobei die Öffnung einrahmend zumindest auf einer Seite des Wandanlageabschnitts ein umlaufender Kragen angeformt ist und wobei der Wandanlageabschnitt und der wenigstens eine umlaufende Kragen einteilig aus einem elastischen wasserdichten Dichtungswerkstoff, insbesondere einem Silikon- oder Kautschukwerkstoff hergestellt ist, ist eine kostengünstige Herstellung erzielt. Sodann kann der Dübel mit der angeordneten Manschette in ein Bohrloch verbracht und die Manschette flächig um das Bohrloch herum angeklebt werden. Hierzu ist der Wandanlageabschnitt vorzugsweise auf einer Seite selbstklebend ausgebildet.

In Weiterbildung der Erfindung weist wenigstens ein umlaufender Kragen endseitig eine ringförmige Verdickung in Art eines Dichtungsrings auf. Hierdurch ist die Dichtwirkung zwischen Manschette und Schraube bzw. Dübel erhöht.

In Ausgestaltung der Erfindung ist wenigstens ein Kragen auf seiner der Öffnung zugewandten Innenmantelfläche mit einer Gleitschicht, insbesondere einer Teflonschicht versehen. Hierdurch ist das Einbringen des Dübels in die Manschette erleichtert. Gemäß der Erfindung geht ein Kragen in einen beutelförmigen Abschnitt über, der an diesen angeformt ist. Dabei weist der beutelförmige Abschnitt bevorzugt eine im Wesentlichen zylindrische Mantelfläche auf, die in einen halbkugelförmigen Abschnitt übergeht. In eine derart ausgestaltete Manschette kann ein Dübel eingebracht werden, der nachfolgend von dem beutelförmigen Abschnitt umgeben in ein Bohrloch eingebracht werden kann. Hierdurch ist eine vollständige Abkapselung des Dübels gegenüber der Wand erzielt. Durch die elastische Ausgestaltung des beutelförmigen Abschnitts ist die Funktion eines in diesen eingebrachten Spreizdübels nicht beeinträchtigt. Um eine Beschädigung des beutelförmigen Abschnitts zu vermeiden, ist für diesen ein ausreichend reißfestes Material zu verwenden.

Gegenstand der Erfindung ist ein Schraubdübel, insbesondere ein Spreiz- oder Hohlraumdübel, mit einem einen Spreizabschnitt aufweisenden Dübelschaft, an dem eine Manschette der vorgenannten Art angeordnet ist. Gemäß der Erfindung ist die Manschette mit dem Dübelschaft nicht lösbar verbunden. Dabei ist die Manschette mit einem beutelförmigen Abschnitt versehen, wobei der Dübelschaft im Wesentlichen innerhalb des beutelförmigen Abschnitts angeordnet ist. Hierdurch ist der Dübel ohne weitere Vorbereitungsmaßnahmen unmittelbar in ein Bohrloch einbringbar, wobei dieser gegenüber der Wand vollständig gekapselt ist.

Andere Weiterbildungen und Ausgestaltungen der Erfindung sind in den übrigen Unteransprüchen angegeben. Beispiele, die nicht Teil der Erfindung sind, sind in den Zeichnungen dargestellt und werden nachfolgend im Einzelnen beschrieben. Es zeigen:
- Figur 1: die schematische Darstellung einer Manschette mit eingebrachtem Dübel;
- Figur 2: die schematische Darstellung einer Manschette in einer weiteren Ausführungsform;
- Figur 3: die schematische Darstellung einer Manschette in einer dritten Ausführungsform und
- Figur 4: die schematische Darstellung einer Schraube mit einer Manschette.

Die als Beispiel gewählte Manschette 1 besteht im Wesentlichen aus einem flächigen Wandanlageabschnitt 2, in den eine kreisrunde Öffnung 3 eingebracht ist. Die Öffnung 3 einrahmend ist auf einer Seite ein Kragen 4 angeformt. Im Beispiel sind Wandanlageabschnitt 2 und Kragen 4 einteilig aus einem Kautschukwerkstoff hergestellt.

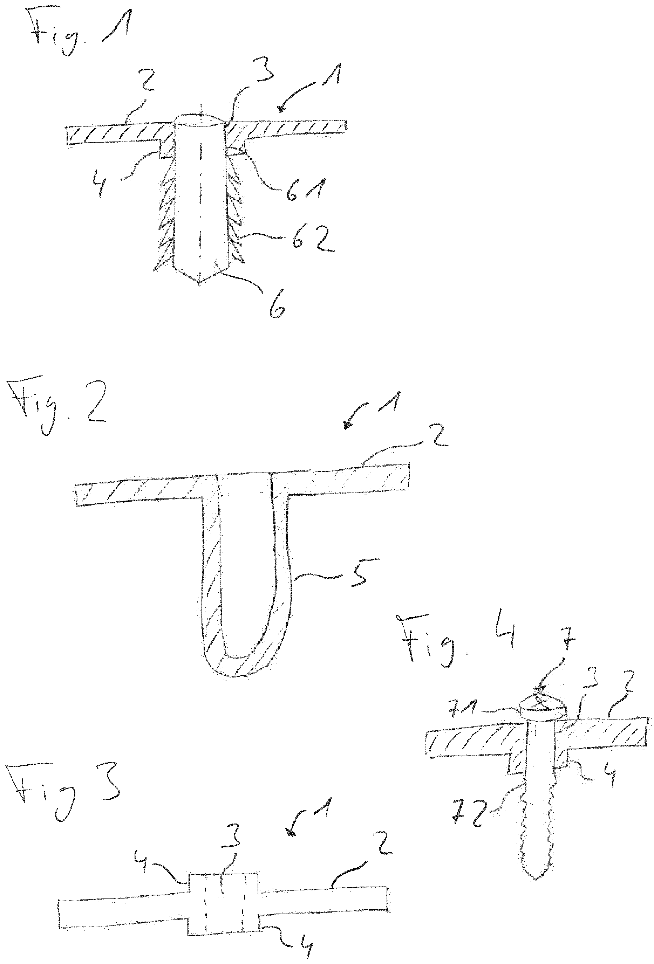

In Figur 1 ist ein Dübel 6 dargestellt, auf dessen Dübelschaft 61 eine Manschette 1 derart aufgebracht ist, dass der umlaufende Kragen 4 innen, an ihrer den Spreizelementen 62 zugewandten Seite der Manschette 1 angeordnet ist. An ihrer dem Kragen 4 zugewandten Seite ist der Wandanlageabschnitt 2 selbstklebend ausgebildet. Der so mit der Manschette 1 versehene Dübel 6 kann einfach in ein - nicht dargestelltes - Bohrloch eingeschoben werden, wonach der selbstklebende Wandanlageabschnitt 2 flächig an der Wand fixiert werden kann.

Im Beispiel gemäß Figur 2 geht der Kragen 4 der Manschette 1 in ein Beutelteil 5 über, dass eine im Wesentlichen zylindrische Mantelfläche aufweist, die in einen halbkugelförmigen Endabschnitt übergeht. An seiner dem Beutelteil 5 zugewandten Seite ist der Wandanlageabschnitt 2 wiederum selbstklebend ausgeführt. Ein - nicht dargestellter - Dübel kann einfach in das Beutelteil 5 eingeschoben werden, wonach dieses mit dem Dübel in ein - nicht dargestelltes - Bohrloch einer Wand eingebracht werden kann. Der selbstklebend ausgebildete Wandanlageabschnitt 2 kann sodann flächig an der Wand fixiert werden. Zum einfacheren Eingleiten eines Dübels in das Beutelteil 5 ist dieses innen vorzugsweise mit einer Gleitschicht, beispielsweise einer Teflonschicht versehen.

Im Beispiel gemäß Figur 3 ist der Wandanlageabschnitt 2 die Offnung 3 einrahmend auf beiden Seiten mit einem umlaufenden Kragen 4 versehen. Hierdurch ergibt sich eine breitere Dichtfläche zwischen Manschette 1 und einem von dieser aufgenommene Dübel oder Schraube.

In Figur 4 ist eine Schraube 7 dargestellt, auf deren Schraubenschaft 71 der Kragen 4 einer Manschette 1 aufgebracht ist. Dabei ist der umlaufende Kragen 4 an seiner dem Schraubenkopf 72 gegenüberliegenden Seite des Wandanlageabschnitts 2 angeordnet. Auch hier ist der Wandanlageabschnitt 2 an seiner dem Kragen 4 zugewandten Seite selbstklebend ausgebildet. Zur Verbesserung der Dichtwirkung ist an den Kragen 4 endseitig eine ringförmige Verdickung in Art eines Dichtungsrings angeformt.

## Patentansprüche

1. Schraubdübel (6), insbesondere Spreiz- oder Hohlraumdübel, mit einem einen Spreizabschnitt aufweisenden Dübelschaft (61), wobei an dem Dübelschaft (61) eine Manschette (1) zur Abdichtung des Schraubdübels gegenüber einer Wand angeordnet ist, die einen flächigen Wandanlageabschnitt (2) umfasst, in den eine im Wesentlichen kreisrunde Öffnung (3) eingebracht ist, wobei die Öffnung einrahmend zumindest auf einer Seite des Wandanlageabschnitts (2) ein umlaufender Kragen (4) angeformt ist und wobei der Wandanlageabschnitt (2) und der wenigstens eine umlaufende Kragen (4) einteilig aus einem elastischen, wasserdichten Dichtungswerkstoff, insbesondere einem Silikon- oder Kautschukwerkstoff hergestellt ist, wobei ein Kragen (4) in einen beutelförmigen Abschnitt (5) übergeht, der an diesen angeformt ist, wobei der Dübelschaft (61) im Wesentlichen innerhalb des beutelförmigen Abschnitts (5) angeordnet ist, wodurch eine vollständige Abkapselung des Schraubdübels gegenüber der Wand erzielbar ist, **dadurch gekennzeichnet, dass** die Manschette mit dem Dübelschaft nicht lösbar verbunden ist.

2. Schraubdübel nach Anspruch 1, **dadurch gekennzeichnet, dass** der Wandanlageabschnitt (2) auf einer Seite selbstklebend ausgebildet ist.

3. Schraubdübel nach Anspruch 1 oder 2, **dadurch gekennzeichnet, dass** wenigstens ein umlaufender Kragen (4) endseitig eine ringförmige Verdickung (4) in Art eines Dichtungsrings aufweist.

4. Schraubdübel nach einem der vorgenannten Ansprüche, **dadurch gekennzeichnet, dass** wenigstens ein Kragen (4) auf seiner der Öffnung (3) zugewandten Innenmantelfläche mit einer Gleitschicht, insbesondere einer Teflonschicht versehen ist.

5. Schraubdübel nach einem der vorgenannten Ansprüche, **dadurch gekennzeichnet, dass** der beutelförmige Abschnitt (5) eine im Wesentlichen zylindrische Mantelfläche aufweist, die in einen halbkugelförmigen Abschnitt übergeht.

## Claims

1. Screw anchor (6), in particular expansion or cavity anchor, with an anchor shaft (61) having an expansion section, wherein a sleeve (1) is arranged at the anchor shaft (61) for sealing the screw anchor against a wall, which sleeve comprises a flat wall abutment portion (2), in which a substantially circular opening (3) is inserted, wherein a circumferential collar (4) framing the opening is moulded-on on at least one side of the wall abutment portion (2) and wherein the wall abutment portion (2) and the at least one circumferential collar (4) is produced in one piece from an elastic, waterproof sealing material, in particular a silicone or rubber material, wherein a collar (4) merges into a bag-shaped section (5) moulded thereon, wherein the anchor shaft (61) is substantially arranged within the bag-shaped section (5), whereby a complete encapsulation of the screw anchor against the wall is achievable, **characterised in that** the sleeve is non-detachably connected to the anchor shaft.

2. Screw anchor according to claim 1, **characterised in that** the wall abutment portion (2) is self-adhesive on one side.

3. Screw anchor according to claim 1 or 2, **characterised in that** at least one circumferential collar (4) has an annular thickening (4) in the manner of a sealing ring at its end.

4. Screw anchor according to one of the previous claims, **characterised in that** at least one collar (4) is provided with a sliding layer, in particular a Teflon layer, on its inner surface facing the opening (3).

5. Screw anchor according to one of the previous claims, **characterised in that** the bag-shaped section (5) has a substantially cylindrical outer surface, which merges into a hemispherical section.

## Revendications

1. Cheville (6) de vissage, notamment cheville expansible ou à cavité, avec tige (61) de cheville présentant un segment expansible, sachant qu'est disposée contre la tige (61) de cheville une manchette (1) servant à étanchéiser la cheville de vissage par rapport à un mur, manchette qui comprend un segment (2) appliquant à plat contre le mur, segment dans lequel a été ménagé un orifice (3) pour l'essentiel circulaire, sachant qu'un collet (4) périphérique encadrant l'orifice est moulé contre au moins un côté du segment (2) en applique murale, et sachant que le segment (2) en applique murale et au moins un collet (4) périphérique sont fabriqués monobloc à partir d'un matériau d'étanchéité élastique étanche à l'eau, en particulier d'un matériau en silicone ou caoutchouc, sachant qu'un collet (4) devient un segment (5) en forme de sachet moulé contre le collet, sachant que la tige (61) de cheville est disposée essentiellement à l'intérieur du segment (5) en forme de sachet, faisant que l'on peut obtenir une cheville de vissage entièrement isolée par rapport au mur, **caractérisée en ce que** la manchette est reliée à la tige de cheville de manière indissociable.

2. Cheville de vissage selon la revendication 1, **caractérisée en ce que** le segment (2) en applique murale est configuré autocollant sur un côté.

3. Cheville de vissage selon la revendication 1 ou 2, **caractérisée en ce qu'**au moins un collet (4) périphérique présente en son extrémité un bourrelet (4) annulaire d'un type assimilable à une bague d'étanchéité.

4. Cheville de vissage selon l'une des revendications précédentes, **caractérisée en ce qu'**au moins un collet (4), sur sa surface d'enveloppe intérieure regardant l'orifice (3), est muni d'une couche de glissement, notamment d'une couche de téflon.

5. Cheville de vissage selon l'une des revendications précédentes, **caractérisée en ce que** le segment (5) en forme de sachet présente une surface d'enveloppe essentiellement cylindrique qui devient un segment hémisphérique.
